# EUROPEAN PATENT APPLICATION

(11) **EP 4 641 647 A1**
(43) Date of publication of application: **29.10.2025**
(21) Application number: 24760518.1
(22) Date of filing: 08.02.2024
(51) Int. Cl.: H01M 4/04, B05C 11/04, H01M 10/052

(54) **DOCTOR BLADE AND APPARATUS FOR MANUFACTURING ELECTRODE INCLUDING SAME**

(30) Priority: 23.02.2023 KR 20230024345; 07.02.2024 KR 20240018641
(71) Applicant: LG Energy Solution, Ltd., Seoul 07335 (KR)
(72) Inventor: KIM, Soon, Daejeon 34122 (KR); CHOI, Kyuhyun, Daejeon 34122 (KR); CHUNG, Changkwon, Daejeon 34122 (KR); GU, Jaeon, Daejeon 34122 (KR); CHUN, Dong Jae, Daejeon 34122 (KR)
(74) Representative: Plasseraud IP
(86) International application number: PCT/KR2024/001960
(87) International publication number: WO 2024/177328

(57) **Abstract**

According to an embodiment of the present disclosure, there is provided a doctor blade comprising: a first blade having a first tip including an inclined plane; and a second blade having a second tip including a curved surface, wherein the first blade and the second blade are in contact with each other, wherein an active material is provided on a current collector and can be moved integrally or individually towards a traveling electrode or vice versa.

## Description

### [TECHNICAL FIELD]

### Cross Citation with Related Application(s)

This application claims the benefit of Korean Patent Application No. 10-2023-0024345 filed on February 23, 2023 and Korean Patent Application No. 10-2024-0018641 filed on February 7, 2024 in the Korean Intellectual Property Office, the disclosures of which are incorporated herein by reference in their entirety.

The present disclosure relates to a doctor blade, an apparatus for manufacturing an electrode including the same, a method for forming patterns on an electrode and a method for manufacturing an electrode, and more specifically, to a doctor blade, an apparatus for manufacturing an electrode including the same, a method for forming patterns on an electrode and a method for manufacturing an electrode, which neatly process a boundary portion of patterns during electrode pattern formation in the electrode process and also make the thickness of the provided active material uniform.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, a lithium secondary battery, and the like. Among them, the lithium secondary battery has come into the spotlight because it has advantages, for example, hardly exhibiting memory effects compared to nickel-based secondary batteries and thus being freely charged and discharged, and having very low self-discharge rate and high energy density.

The manufacturing process of such a lithium secondary battery is roughly classified into an electrode process, an assembly process, and a formation process. The electrode process is again divided into an active material mixing process, an electrode coating process, a rolling process, a slitting process, a winding process, and the like. Among them, the electrode coating process is divided into a wet process of providing an active material slurry onto an electrode current collector and a dry process of providing the active material onto the current collector in a solid state as it is.

More effective methods for neatly processing a boundary portion of patterns during electrode pattern formation and also uniformizing the thickness of the active material provided on the current collector are required.

### [DETAILED DESCRIPTION OF THE INVENTION]

### [Technical Problem]

It is an object of the present disclosure to provide a doctor blade, an apparatus for manufacturing an electrode including the same, a method for forming patterns on an electrode and a method for manufacturing an electrode, which neatly process a boundary portion of patterns during electrode pattern formation after providing an active material onto the current collector, and also make the thickness of the provided active material uniform.

However, the technical problems to be solved by embodiments of the present disclosure are not limited to the above-mentioned problems, and can be variously expanded within the scope of the technical idea included in the present disclosure.

### [Technical Solution]

According to one embodiment of the present disclosure, there is provided a doctor blade comprising: a first blade having a first tip including an inclined plane, and a second blade having a second tip including a curved surface, wherein the first blade and the second blade are in contact with each other, wherein an active material is provided on a current collector and can be moved integrally or individually towards a traveling electrode or vice versa.

The first blade may be located on the upstream side of the second blade in the traveling direction of the electrode, the inclined plane of the first tip of the first blade may be disposed so as to be oriented in a direction opposite to the traveling direction of the electrode, and the curved surface of the second tip of the second blade may be disposed so as to be oriented in the traveling direction of the electrode from the inclined plane.

The first blade is disposed relatively closer to the electrode than the second blade, and the end of the first tip of the first blade may maintain a state of contacting with the current collector, so that the active material provided on the current collector of the traveling electrode is removed to form patterns on a region where the current collector is exposed.

The end of the first tip of the first blade and the outer surface of the end of the second tip of the second blade are connected to each other and may maintain a state of being separated from the current collector by a predetermined distance, so as to flatten the thickness of the active material provided on the current collector of the traveling electrode.

Only the first blade moves toward the traveling electrode, and the end of the first tip of the first blade may contact with the current collector, so that the active material provided on the current collector of the traveling electrode is removed to form patterns on a region where the current collector is exposed.

The first blade, which had moved toward the traveling electrode, returns to its original position, and the end of the first tip of the first blade and the outer surface of the end of the second tip of the second blade are connected to each other and may maintain a state of being separated from the current collector by a predetermined distance, so as to flatten the thickness of the active material provided on the current collector of the traveling electrode.

The end of the first tip of the doctor blade contacts with the current collector, and the active material provided on the current collector of the traveling electrode is removed, so that a region where the current collector is exposed becomes an uncoated part of the electrode, the end of the first tip of the first blade and the outer surface of the end of the second tip of the second blade are connected to each other, so that a region where the active material is flattened becomes a coated part of the electrode, and the uncoated part and the coated part may be alternately arranged to form patterns on the electrode.

The inclination angle of the inclined plane of the first blade may have any one selected from greater than 0 degrees and less than 90 degrees on the basis of the traveling electrode.

The first blade and the second blade may be each arranged orthogonally to the traveling electrode.

The first tip of the first blade further comprises a curved surface at the end, and the curved surface and the inclined surface of the first tip of the first blade may be connected to each other.

The inclined plane of the first tip of the first blade may consist of at least two planes having mutually different inclination angles.

The second tip of the second blade further includes an inclined plane, the curved surface of the second tip of the second blade may be arranged at an end of the second tip of the second blade, and the curved surface and the inclined plane may be connected to each other.

The inclined plane of the second tip of the second blade may consist of at least two planes having mutually different inclination angles.

The doctor blade is used in a dry electrode process, and the active material may be provided as a powder on the current collector.

According to another embodiment of the present disclosure, there is provided an apparatus for manufacturing an electrode, the apparatus comprising: the doctor blade according to the above-mentioned embodiments; a feeder arranged in front of the doctor blade and supplying the active material to the current collector; and a rolling member arranged at the rear of the doctor blade and rolling the electrode provided with the active material.

The apparatus further comprises an air blower arranged at the rear of the doctor blade, wherein the air blower blows air to remove the active material when the active material remains on the uncoated part of the electrode.

According to another embodiment of the present disclosure, there is provided a method for forming patterns on an electrode by the doctor blade according to the above-mentioned embodiments, the method comprising the steps of: moving the first blade downward so as to contact with the surface of the current collector of the traveling electrode; maintaining the position of the first blade for a predetermined period, so that the active material provided on the current collector of the traveling electrode is removed; returning the first blade to its original position so that the end of the first tip of the first blade and the outer surface of the end of the second tip of the second blade are connected to each other; and performing flattening of the active material of the electrode by the first tip of the first blade and the second tip of the second blade, wherein the end of the first tip of the first blade and the end of the second tip of the second blade maintains a state of being separated from the current collector by a predetermined distance.

According to yet another embodiment of the present disclosure, there is provided a method for manufacturing an electrode in the apparatus for manufacturing an electrode according to the above-mentioned embodiments, the method comprising the steps of: supplying an active material onto the current collector of the electrode through a feeder; moving the first blade downward so as to contact with the surface of the current collector of the traveling electrode; maintaining the position of the first blade for a predetermined period, so that the active material provided on the current collector of the traveling electrode is removed; returning the first blade to its original position, so that the end of the first tip of the first blade and the outer surface of the end of the second tip of the second blade are connected to each other; and performing flattening of the active material of the electrode by the first tip of the first blade and the second tip of the second blade, wherein the end of the first tip of the first blade and the end of the second tip of the second blade maintains a state of being separated from the current collector by a predetermined distance.

The method may further comprise removing the active material by blowing air with an air blower when the active material remains on the uncoated part of the electrode where flattening of the active material has been performed.

The method may further comprise rolling the electrode on which flattening of the active material has been performed with a rolling member.

### [Advantageous Effects]

According to embodiments of the present disclosure, there is an advantage that the boundary portion of patterns can be neatly processed during electrode pattern formation in the electrode process, and the thickness of the provided active material can be flattened to make the thickness uniform.

In addition, by using the doctor blade and the apparatus for manufacturing an electrode including the same according to embodiments of the present disclosure, defects in the electrode manufactured thereby can be prevented or significantly reduced, thereby improving the performance of the battery manufactured thereby.

### [BRIEF DESCRIPTION OF THE DRAWINGS]

FIG. 1 is a conceptual diagram of an electrode manufacturing apparatus according to embodiments of the present disclosure.
FIG. 2 shows one embodiment of the doctor blade of the electrode manufacturing apparatus of FIG. 1.
FIG. 3 shows various embodiments of the doctor blade of the electrode manufacturing apparatus of FIG. 1.
FIG. 4 shows another embodiment of the doctor blade of the electrode manufacturing apparatus of FIG. 1.
FIG. 5 is a reference diagram regarding the doctor blade of FIG. 4.
FIG. 6 shows yet another embodiment of the doctor blade of the electrode manufacturing apparatus of FIG. 1.
FIG. 7 shows one embodiment of a process for forming patterns on an electrode by the doctor blade of FIG. 2.
FIG. 8 is a flowchart of a method for manufacturing an electrode comprising a process of forming patterns on the electrode of FIG. 7.
FIGS. 9 and 10 each show modified embodiments in which FIG. 7 is partially modified.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily enlarged or reduced for convenience of description, and thus, it is obvious that the present disclosure is not necessarily limited to those illustrated in the drawings. In the drawings, the thickness of some layers, regions, etc. are exaggerated for clarity . In the drawings, the thicknesses of some layers and region are exaggerated for convenience of description.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain portion being located "above" or "on" a reference portion means the certain portion being located above or below the reference portion and does not particularly mean the certain portion "above" or "on" toward an opposite direction of gravity. Meanwhile, similar to the case where it is described as being formed or located "on" or "above" another part, the case where it is described as being formed or disposed "below" or "under" another part will also be understood with reference to the above-mentioned contents.

Further, since the upper surface/lower surface of a specific member can be determined differently depending on which direction is used as a reference, throughout the description, 'upper surface' or 'lower surface' is defined as meaning two facing surfaces on the z-axis of the corresponding member.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

Now, an apparatus for manufacturing an electrode according to an embodiment of the present disclosure will be described.

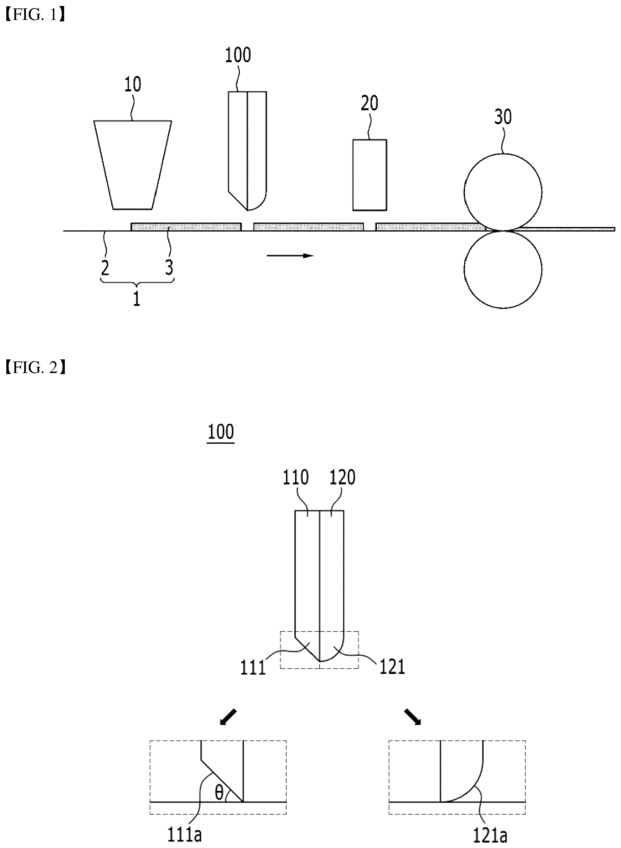

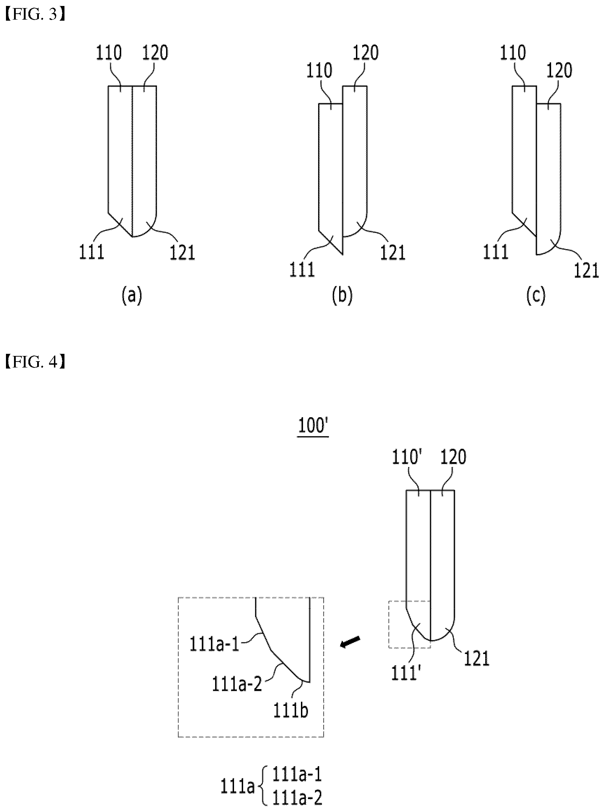

FIG. 1 is a conceptual diagram of an electrode manufacturing apparatus according to embodiments of the present disclosure, which is a diagram which simplifies and shows the electrode manufacturing apparatus viewed from the front. FIG. 2 shows one embodiment of the doctor blade of the electrode manufacturing apparatus of FIG. 1, which is a diagram which simplifies and shows the doctor blade viewed from the front. FIG. 3 shows various embodiments of the doctor blade of the electrode manufacturing apparatus of FIG. 1.

Referring to FIG. 1, the electrode manufacturing apparatus according to an embodiment of the present disclosure largely includes a feeder 10, a doctor blade 100, an air blower 20, and a rolling member 30. If necessary, the apparatus may further include a drying unit, an inspection unit, and the like, and other components may include sub-components provided in a typical electrode manufacturing apparatus.

The feeder 10 supplies an electrode active material 3 to an electrode current collector 2. In the case of a dry electrode manufacturing process, the active material 3 is supplied as powder. A portion where the electrode active material 3 is not provided on the electrode current collector 2 or a portion where the active material 3 is removed by a doctor blade as described below becomes an uncoated part. When some of the electrode active material 3 remains on the electrode current collector 2 in a portion where the electrode active material 3 is not provided or in a portion (i.e., uncoated part) where the active material 3 is removed by a doctor blade, the air blower 20 blows air to blow away the electrode active material 3, thereby preventing the electrode active material 3 from remaining on the current collector. The rolling member 30 may be, for example, a rolling roll, and rolls the electrode active material 3 provided to the electrode current collector 2. The electrode active material 3 supplied through the feeder 10 may be one in which a conductive material, an organic binder polymer, an additive, and the like are selectively mixed, as necessary. In addition, other specific details regarding the feeder 10, air blower 20, and rolling member 30 are the same as those of the feeder, air blower, and rolling member provided in a typical electrode manufacturing apparatus, and therefore, a description thereof will be omitted.

Referring to FIGS. 1 and 2, the doctor blade 100 according to an embodiment of the present disclosure includes a first blade 110 and a second blade 120, wherein the first blade 110 and the second blade 120 are configured as a set. The first blade 110 and the second blade 120 are arranged in a line in a vertical direction and contact each other. In addition, the inclined plane 111a of the first blade 110 and the curved surface 121a of the second blade 120 are oriented in opposite directions.

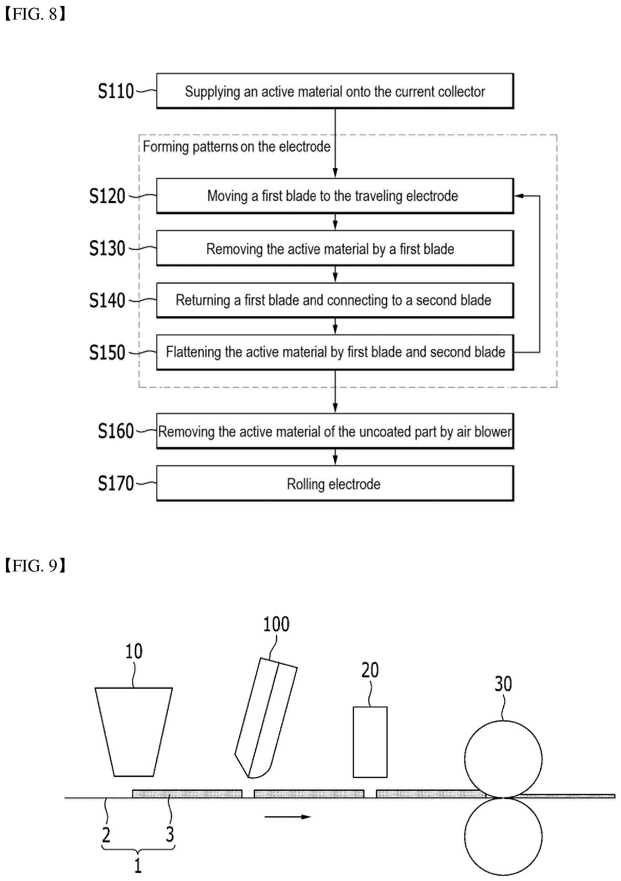

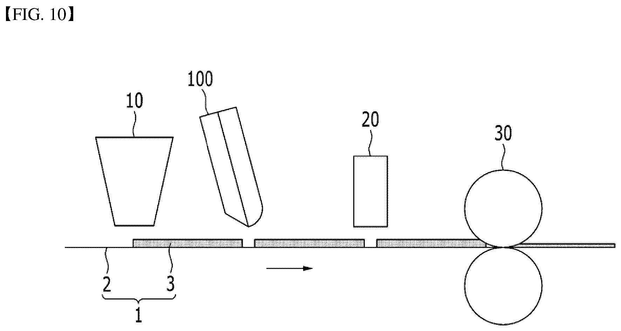

During the electrode manufacturing process (electrode pattern formation), the first blade 110 and the second blade 120 may be arranged, for example, orthogonally to the traveling direction of the electrode 1. However, the present disclosure is not limited thereto, and in some cases, the first blade 110 and the second blade 120 may have a slightly inclined shape as shown in FIG. 9 or 10.

In addition, the first blade 110 and the second blade 120 may contact each other along the height direction, but may individually move in a vertical direction. FIG. 3(a) shows a case where the end of the first tip 111 of the first blade 110 and the end of the second tip 121 of the second blade 120 coincide with each other. That is, this shows a case where the end of the first tip 111 and the outer surface of the end of the second tip 121 of the second blade 120 are connected to each other.

FIG. 3(b) shows a case where the first blade 110 is located relatively lower than the second blade 120. That is, this shows a case where the first tip 111 of the first blade 110 is located relatively lower than the second tip 121 of the second blade 120.

FIG. 3(c) shows a case where the second blade 120 is located relatively lower than the first blade 110. That is, this shows a case where the second tip 121 of the second blade 120 is located relatively lower than the first tip 111 of the first blade 110.

The first tip 111 of the first blade 110 consists of an inclined plane 111a, and the second tip 121 of the second blade 120 consists of a curved surface 121a. The inclination angle θ of the inclined plane 111a from the electrode current collector 2 may be, for example, any one selected from greater than 0 degrees and less than 90 degrees, for example, any one selected from 10 degrees or more and 80 degrees or less, and for example, any one selected from 10 degrees or more and 45 degrees or less.

Since the first tip 111 of the first blade 110 is formed of an inclined plane 111a, so that the end is sharp, which is advantageous for forming patterns on the electrode (i.e., forming the boundary portion of the active material provided on the electrode current collector 2). Further, the first blade 110 is located further forward (upstream side) than the second blade 120 in the traveling direction of the electrode 1. In addition, the inclined plane 111a of the first tip 111 of the first blade 110 is oriented in a direction opposite to the traveling direction of the electrode 1. That is, the inclined plane 111a of the first tip 111 of the first blade 110 is oriented toward the active material 3 of the approaching electrode. Thereby, it is possible to form patterns on the electrode (i.e., form a boundary portion of the active material provided on the electrode current collector 2) by the first blade 110 alone (see FIG. 3(b)). At this time, the first blade 110 is located relatively lower than the second blade 120.

When the end of the first tip 111 of the first blade 110 and the end of the second tip 121 of the second blade 120 coincide with each other, that is, when the end of the first tip 111 of the first blade 110 and the outer surface of the end of the second tip 121 of the second blade 120 are connected to each other (see FIG. 3(a)), it is advantageous to flatten the thickness of the active material and simultaneously make the thickness of the active material uniform by using the first tip 111 of the first blade 110 and the second tip 121 of the second blade 120. Therefore, when the end of the first tip 111 of the first blade 110 and the end of the second tip 121 of the second blade 120 coincide with each other, it is possible to flatten the thickness of the active material and make the thickness of the active material uniform by using the first tip 111 of the first blade 110 and the second tip 121 of the second blade 120 that are integrated. At this time, the end of the first tip 111 of the first blade 110 and the end of the second tip 121 of the second blade 120 is separated from the current collector 2 of the traveling electrode 1 by a predetermined distance. The separation distance may be, for example, the thickness of the active material 3 to be flattened, and is previously determined in accordance with an environment in which the invention is implemented and/or the electrode to be manufactured.

In addition, since the second tip 121 of the second blade 120 is formed of a curved surface, in some cases, it is also possible to flatten the thickness of the active material and make the thickness of the active material uniform by using the second tip 121 of the second blade 120 alone (see FIG. 3(c)), if necessary.

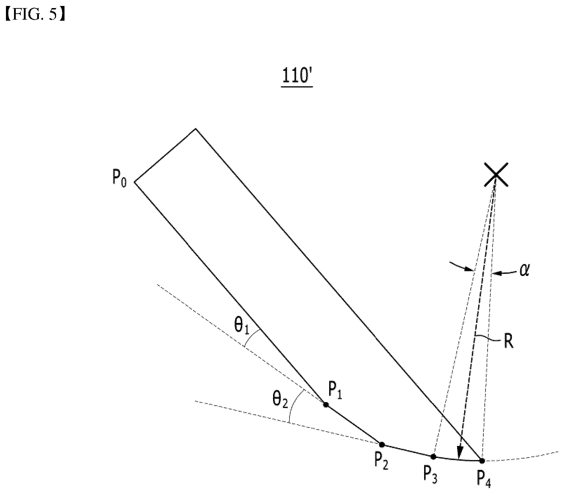

FIG. 4 shows another embodiment of the doctor blade of the electrode manufacturing apparatus of FIG. 1. More specifically, this shows a case where the first blade 110 shown in FIG. 3 is changed to the first blade 110' shown in FIG. 4. The doctor blade 100' of FIG. 4 includes a first blade 110' and a second blade 120. FIG. 5 shows more specifically the first blade 110' of FIG. 4.

The first blade 110' has a first tip 111' including at least one inclined plane 111a and one curved surface 111b. Among them, the curved surface 111b is located at the end of the tip 111' of the first blade 110'. For example, it means a surface between P₃ and P₄ in FIG. 5. In other words, the end of the tip 111' of the first blade 110' is processed into round shape. The end of the tip 111' of the first blade 110' is formed of a curved surface 111b, and therefore, it is possible to prevent excessive pressure from being concentrated on the end when the end contacts with the current collector 2 or the active material 3 of the electrode, which could cause the end to wear out or become partially damaged.

The first tip 111' of the first blade 110' has an inclined plane 111a following a curved surface 111b located at the end. That is, the curved surface 111b and the inclined plane 111a are connected to each other. The inclined plane 111a may be provided in one number, and may be provided as two inclined planes 111a-1 and 111a-2 having mutually different angles θ₁ and θ₂ therebetween, as illustrated herein. At this time, an angle θ₂ between the end of the first tip 111' of the first blade 110' and the inclined plane 111a-2 disposed closer than the inclined plane 111a-1 is larger than an angle θ₁ between the end of the tip 111' and the inclined plane 111a-1. When flattening the active material 3, the first blade 110' may contact with the active material 3 to further reduce the resistance received from the active material 3. Accordingly, it is possible to flatten the active material 3 more effectively.

Here, referring to FIG. 5, the angle θ₂ therebetween means, for example, an angle between an extension line which connects between P₁ and P₂ corresponding to the inclined plane 111a-1 and an extension line which connects between P₂ and P₃ corresponding to the inclined plane 111a-2 in FIG. 4. In addition, the angle θ₁ therebetween means an angle between an extension line which connects between P₁ and P₂ corresponding to the inclined plane 111a-1 and a line which extends in the overall height (length) direction of the first blade 110'. The angle θ₁ therebetween has any one value selected from greater than 0 degrees and less than 45 degrees, and the angle θ₂ therebetween has any one value selected from greater than 0 degrees and less than 90 degrees, wherein the angle θ₂ therebetween may be larger than the angle θ₁ therebetween.

Meanwhile, the number of inclined planes is not limited to those set forth above, and can be adjusted in accordance with an environment in which the invention is implemented. In addition, the size ratio of the plurality of inclined planes is not limited to those illustrated, and can be adjusted in accordance with an environment in which the invention is implemented.

Further, the curved surface 111b has a radius of curvature R and a central angle α, wherein the radius of curvature R and the central angle α can be variously adjusted in accordance with an environment in which the invention is implemented.

In the embodiment of FIG. 4 as well, the second blade 120 and the first blade 110' are arranged in a ling in the vertical direction and contact each other. In addition, the curved surface 111b and the inclined planes 111a-1 and 111a-2 of the first blade 110' and the curved surface 121a of the second blade 120 are oriented in opposite directions. Further, the second blade 120 and the first blade 110' may contact each other along the height direction, but may individually move in the vertical direction.

It is possible to form patterns on an electrode (that is, form a boundary portion of the active material provided on the electrode current collector 2) by using the first blade 110' alone. At this time, the first blade 110' is located relatively lower than the second blade 120. In addition, when the end of the first tip 111' of the first blade 110' and the end of the second tip 121 of the second blade 120 coincide with each other, it is possible to flatten the thickness of the active material and simultaneously make the thickness of the active material uniform by using the first tip 111' of the first blade 110' and the second tip 121 of the second blade 120. Of course, in some cases, it is also possible to flatten the thickness of the active material and make the thickness of the active material uniform by using the second tip 121 of the second blade 120 alone.

Since other descriptions and process details regarding the second blade 120 and the first blade 110' overlap with the description regarding the doctor blade 100 of FIG. 3, refer to those described above in FIGS. 1 and 3.

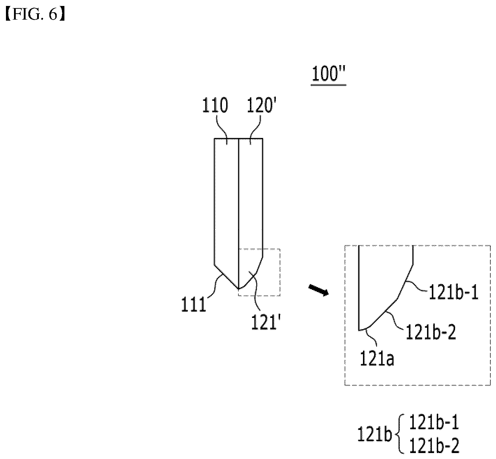

FIG. 6 shows yet another embodiment of the doctor blade of the electrode manufacturing apparatus of FIG. 1. More specifically, this shows a case where the second blade 120 is changed to the second blade 120' shown in FIG. 6. That is, the doctor blade 100" in FIG. 6 includes a first blade 110 and a second blade 120'.

The second blade 120' of FIG. 6 is constituted right and left symmetrically to the first blade 110' of FIG. 4 when viewed in the drawing, and the rest has the structure and shape similar thereto. That is, the second blade 120' has a curved surface 121a at the end of the second tip 121' and has at least one inclined plane 121b following the curved surface. The curved surface 121a and the at least one inclined plane 121b of the second blade 120' of FIG. 6 each have the structure and shape that are right and left symmetrically to the curved surface 111b and at least one inclined plane 111a of the first blade 110' of FIGS. 4 and 5, and therefore, refer to those set forth above, and a detailed description thereof is omitted as it is redundant.

It is possible to form patterns on an electrode (that is, form a boundary portion of the active material provided on the electrode current collector 2) by using the first blade 110 alone. At this time, the first blade 110 is located relatively lower than the second blade 120'. In addition, when the end of the first tip 111 of the first blade 110 and the end of the second tip 121' of the second blade 120' coincide with each other, it is possible to flatten the thickness of the active material and simultaneously make the thickness of the active material uniform by the first tip 111 of the first blade 110 and the second tip 121' of the second blade 120'. Of course, in some cases, it is also possible to flatten the thickness of the active material and make the thickness of the active material uniform by the second tip 121' of the second blade 120' alone.

Meanwhile, the first blade 110 and the second blade 120' of FIG. 6 overlap with the first blade 110 and the second blade 120' described above in FIGS. 1 to 5. Thus, for further details, refer to those described above in FIGS. 1 to 5.

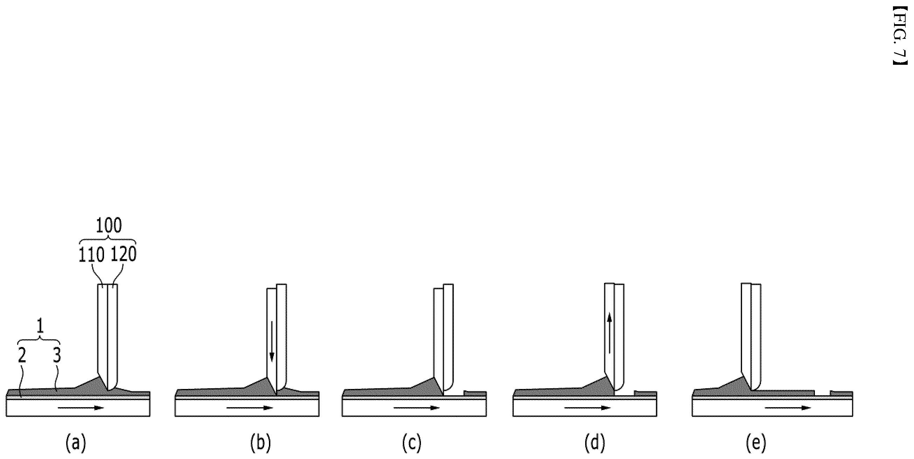

FIG. 7 shows one embodiment of a process for forming patterns on an electrode by the doctor blade of FIG. 2.

Referring to FIG. 7, a method for forming patterns on an electrode by a doctor blade (see steps S120 to S150) and a method for manufacturing an electrode comprising a process of forming patterns on the electrode (see steps S110 to S170) will be described. FIG. 8 is a flowchart of a method for manufacturing an electrode comprising a process of forming patterns on the electrode of FIG. 7.

A step (S110) of supplying the electrode active material 3 onto the current collector 2 of the electrode through the feeder 10 (see FIG. 1) is performed. At this time, the electrode 1 travels in the traveling direction. In addition, the doctor blade 100 is located at a point where patterns are to be formed on the active material 3 (for example, a point where the boundary between the coated part and the uncoated part is to be formed) as shown in FIG. 7(a).

Among the methods for manufacturing an electrode, the method for forming patterns on an electrode corresponds to steps S120 to S150, and is as follows.

As shown in FIG. 7(b), a step (S120) of moving the first blade toward the current collector 2 of the traveling electrode is performed. For example, in step S120, the first tip 111 of the first blade 110 is lowered to the surface of the current collector 2 of the electrode, so that the first tip 111 of the first blade 110 (the end of the first tip) may contact on the current collector of the electrode. At this time, the first blade 110 is located relatively lower than the second blade 120. In step S120, the point where the first tip 111 of the first blade 110 contacts with the electrode 1 becomes the boundary between the coated part, which is a region provided with the active material 3 on the current collector 2, and the uncoated part, which is a region provided with the active material 3 on the current collector 2, are removed.

Next, as shown in FIG. 7(c), a step (S130) of maintaining the position of the lowered first blade 110 in FIG. 7(b) for a predetermined period is performed. In step S130, the active material 3 is removed on the traveling electrode 1 to form a region where the current collector 2 is exposed. More specifically, the current collector 2 of the electrode 1 continues to travel in the traveling direction. However, the active material 3 of the electrode 1 is blocked by the first blade 110 and cannot travel. This is because, as described above in step S120, the end of the first tip 111 of the first blade 110 contacts with the surface of the current collector 2 of the electrode. Accordingly, as shown in FIG. 7(c), the active material 3 is removed to form an uncoated part, which is a region where the current collector 2 is exposed.

Next, as shown in FIG. 7(d), a step (S140) of returning the first blade 110 to its original position is performed. That is, the first blade 110 moves upward in a direction opposite to the moving direction of the first blade 110 in step S120 and returns to its original position. Accordingly, the end of the first tip 111 of the first blade 110 and the end of the second tip 121 of the second blade 120 coincide with each other. That is, the end of the first tip 111 of the first blade 110 and the outer surface of the end of the second tip 121 of the second blade 120 are connected to each other. At this time, the end of the first tip 111 of the first blade 110 and the end of the second tip 121 of the second blade 120 are separated from the current collector 2 of the traveling electrode 1 by a predetermined distance. The separation distance may be, for example, the thickness of the active material 3 to be flattened, and may be previously determined in accordance with an environment in which the invention is implemented and/or the electrode to be manufactured.

Next, in the state shown in FIG. 7(d), that is, in the state in which the end of the first tip 111 of the first blade 110 and the end of the second tip 121 of the second blade 120 coincide as one, the method comprises a step (S150) of flattening the active material 3 of the electrode 1 by the first tip 111 of the first blade 110 and the second tip 121 of the second blade 120. The portion where the active material 3 of the electrode 1 is flattened in step S150 becomes a coated part. By the above-mentioned steps, patterns in which the coated part and the uncoated part are alternately located is formed on the electrode 1.

In a state where the electrode active material 3 is continuously supplied through a feeder 10 (see FIG. 1) on the current collector 2 of the electrode described above in step S110, the step S120 is repeated again to form a boundary between the coated part and the uncoated part of the electrode 1. Subsequently, the above-mentioned steps S130 to S150 are sequentially repeated. If steps S120 to S150 are repeated several times in this order, it is possible to manufacture the electrode 1 having patterns in which the coated part and the uncoated part are alternately repeated.

When the active material 3 remains in the uncoated part of the electrode 1 on which flattening of the active material 3 has been performed, the method further comprises a step (S160) of removing the active material by blowing air with an air blower 20 (see FIG. 1). In addition, the method further comprises a step (S170) of rolling the electrode 1 on which the active material 3 has been flattened using a rolling member 30 (see FIG. 1). Step S160 may be performed between steps S150 and S170 as shown in FIG. 8. Alternatively, step S160 may be performed after step S170. After that, the electrode is slit to manufacture an electrode assembly.

FIGS. 9 and 10 each show modified embodiments in which FIG. 7 is partially modified. As shown in FIG. 7, during the electrode manufacturing process (electrode pattern formation), the first blade 110 and the second blade 120 may be arranged, for example, orthogonally to the traveling direction of the electrode 1. However, the present disclosure is not limited thereto, and in some cases, the first blade 110 and the second blade 120 may have a slightly inclined shape as shown in FIG. 9 or FIG. 10.

Meanwhile, in FIGS. 7 to 10, the process of forming patterns on the electrode 1 by the doctor blade 100 of FIG. 2 is explained, but the present disclosure is not limited thereto, and can be similarly applied to the process of forming patterns on the electrode 1 by the doctor blade 100' shown in FIG. 4 or the doctor blade 100" shown in FIG. 6.

The embodiments of the present disclosure described above can be applied, for example, to a dry electrode manufacturing process.

The electrode according to the present disclosure may be a positive electrode or a negative electrode. That is, the manufacturing process of the electrode according to the present disclosure is not particularly limited to the positive electrode or the negative electrode, can be easily applied to any electrode manufacturing process, and can manufacture different electrodes depending on the material (e.g., positive electrode active material or negative electrode active material) used for manufacturing each electrode. Accordingly, the term "electrode" used herein for electrode, electrode active material 3, electrode current collector 2, etc. may mean both a positive electrode and a negative electrode, unless specifically defined.

In the dry electrode manufacturing process of the present disclosure, the electrode active material 3 and the binder polymer are mixed in a dry manner to obtain a mixture.

The positive electrode active material can be used without particular limitation as long as it is a material that contains lithium and thus can intercalate/deintercalate lithium ions. For example, the positive electrode active material may include a layered compound such as lithium cobalt oxide (LiCoO₂) and lithium nickel oxide (LiNiO₂) or a compound substituted with one or more transition metals; lithium manganese oxides such as the chemical formula Li₁₊ₓMn₂₋ₓO₄ (where x is 0 ~ 0.33), LiMnO₃, LiMn₂O₃, LiMnO₂; lithium copper oxide (Li₂CuO₂); vanadium oxides such as LiV₃O₈, LiV₃O₄, V₂O₅, and Cu₂V₂O₇; a Ni-site type lithium nickel oxide represented by chemical formula LiNi₁₋ₓMₓO₂ (where M=Co, Mn, Al, Cu, Fe, Mg, B or Ga, and x=0.01 ~ 0.3); lithium manganese composite oxide represented by chemical formulae LiMn₂₋ₓMₓO₂ (where M = Co, Ni, Fe, Cr, Zn or Ta, and x = 0.01 ~ 0.1) or Li₂Mn₃MO₈ (where, M = Fe, Co, Ni, Cu or Zn); lithium manganese composite oxide having a spinel structure represented by chemical formula LiNiₓMn₂₋ₓO₄; LiMn₂O₄ in which a part of Li in the chemical formula is substituted with an alkaline earth metal ion; disulfide compound; Fe₂(MoO₄)₃, or the like, but are not limited thereto. Further, the positive electrode may have a positive electrode mixture layer comprising metallic lithium, a carbon material, a metal compound or a mixture thereof. The metal compound may be a compound containing one or more metal elements selected from the group consisting of Si, Ge, Sn, Pb, P, Sb, Bi, Al, Ga, In, Ti, Mn, Fe, Co, Ni, Cu, Zn, Ag, Mg, Sr, and Ba, or a mixture thereof.

The negative electrode may be manufactured by providing a negative electrode active material onto a negative electrode current collector and rolling it, or may be manufactured in a dry manner similarly to the above-mentioned positive electrode manufacturing process, and may optionally further contain a conductive material, an organic binder polymer, an additive, and the like as in the positive electrode, if necessary.

In addition, the negative electrode active material may include, for example, a carbon material and a silicon material. The carbon material refers to a carbon material containing carbon atoms as a main component, and examples of the carbon material include graphite having a graphene structure completely formed as in natural graphite, soft carbon having a low-crystalline graphene structure (structure in which hexagonal honeycomb-shaped planes of carbons are arranged in a layered form), and hard carbon, artificial graphite, expanded graphite, carbon fiber, non-graphitizable carbon, carbon black, acetylene black, Ketjen black, carbon nanotube, fullerene, activated carbon, graphene, carbon nanotube, and the like in which these structures are mixed with amorphous portions, and preferably, may include one or more selected from the group consisting of natural graphite, artificial graphite, and carbon nanotube. More preferably, the carbon material includes natural graphite and/or artificial graphite, and may include one or more among carbon blacks and carbon nanotubes together with the natural graphite and/or artificial graphite. In this case, the carbon material may include 0.1 to 10 parts by weight of carbon black and/or carbon nanotubes based on 100 parts by weight of the total carbon material, and more specifically, 0.1 to 5 parts by weight; or 0.1 to 2 parts by weight of carbon black and/or carbon nanotube based on 100 parts by weight of the total carbon material.

In addition, the silicon material is a particle containing silicon (Si) as a main component as a metal component, and may include one or more of silicon (Si) particles and silicon oxide (SiO_{X}, where 1 ≤ X ≤ 2) particles. As an example, the silicon material may include silicon (Si) particles, silicon monoxide (SiO) particles, silicon dioxide (SiO₂) particles, or a mixture of these particles.

Further, according to the present disclosure, the current collector includes a metal plate having electrical conductivity and may be one selected suitably depending on polarity of electrodes known in the field of secondary batteries.

Further, according to the present disclosure, the conductive material is not particularly limited, as long as it causes no chemical change in the corresponding battery and has conductivity.

Further, according to the present disclosure, the binder resin is not particularly limited as long as it is a compound that assists binding between the active material and the conductive material and binding to the current collector.

According to embodiments of the present disclosure, when patterns are to be formed on the surface of an electrode, an additional process for forming the pattern is not required, thereby improving process efficiency. In addition, by using the electrode manufacturing apparatus according to embodiments of the present disclosure, the specific surface area of the electrode can be effectively expanded, which allows more electrolyte ions to be stored when charging the battery, thereby improving battery performance.

The terms representing directions such as the front side, the rear side, the left side, the right side, the upper side, and the lower side have been used in the present embodiment, but it is obvious to those skilled in the art that the terms used are provided simply for convenience of description, and may become different according to the position of an object, the position of an observer, or the like.

The electrode manufactured by applying the control method of the electrode manufacturing apparatus according to the present embodiment described above may be included in a secondary battery, and a plurality of such secondary batteries may be gathered together to form a battery module. The battery modules can be mounted together with various control and protection systems such as a BMS (battery management system), and a cooling system to form a battery pack.

The secondary battery, the battery module or the battery pack can be applied to various devices. Specifically, it can be applied to vehicle means such as an electric bike, an electric vehicle, and a hybrid electric vehicle, but are not limited thereto, and can be applied to various devices capable of using a secondary battery.

Although the invention has been described in detail with reference to preferred embodiments thereof, the scope of the present disclosure is not limited thereto, and various modifications and improvements can be made by those skilled in the art using the basic concepts of the present disclosure, which are defined in the appended claims, which also falls within the scope of the present disclosure.

### [Description of Reference Numerals]

1: electrode
2: current collector
3: active material
10: feeder
20: air blower
30: rolling member
100: doctor blade
110, 110': first blade
111, 111': first tip
111a: inclined plane
111b: curved surface
120, 120': second blade
121, 121': second tip
121a: curved surface
121b: inclined plane

## Claims

1. A doctor blade comprising:
a first blade having a first tip including an inclined plane; and
a second blade having a second tip including a curved surface,
wherein the first blade and the second blade are in contact with each other, wherein an active material is provided on a current collector, and the first blade and the second blade can be moved integrally or individually towards or away from a traveling electrode.

2. The doctor blade according to claim 1, wherein:
the first blade is located on the upstream side of the second blade in the traveling direction of the electrode,
the inclined plane of the first tip of the first blade is disposed so as to be oriented in a direction opposite to the traveling direction of the electrode, and
the curved surface of the second tip of the second blade is disposed so as to be oriented in the traveling direction of the electrode.

3. The doctor blade according to claim 1, wherein:
the first blade is disposed relatively closer to the electrode than the second blade, and the end of the first tip of the first blade maintains a state of contacting with the current collector, so that the active material provided on the current collector of the traveling electrode is removed to form patterns on a region where the current collector is exposed.

4. The doctor blade according to claim 1, wherein:
the end of the first tip of the first blade and the outer surface of the end of the second tip of the second blade are connected to each other and maintain a state of being separated from the current collector by a predetermined distance, so as to flatten the thickness of the active material provided on the current collector of the traveling electrode.

5. The doctor blade according to claim 1, wherein:
only the first blade moves toward the traveling electrode, and the end of the first tip of the first blade contacts with the current collector, so that the active material provided on the current collector of the traveling electrode is removed to form patterns on a region where the current collector is exposed.

6. The doctor blade according to claim 5, wherein:
the first blade, which had moved toward the traveling electrode, returns to its original position, and the end of the first tip of the first blade and the outer surface of the end of the second tip of the second blade are connected to each other and maintain a state of being separated from the current collector by a predetermined distance, so as to flatten the thickness of the active material provided on the current collector of the traveling electrode.

7. The doctor blade according to claim 1, wherein:
the end of the first tip of the doctor blade contacts with the current collector, and the active material provided on the current collector of the traveling electrode is removed, so that a region where the current collector is exposed becomes an uncoated part of the electrode,
the end of the first tip of the first blade and the outer surface of the end of the second tip of the second blade are connected to each other, so that a region where the active material is flattened becomes a coated part of the electrode, and
the uncoated part and the coated part are alternately arranged to form patterns on the electrode.

8. The doctor blade according to claim 1, wherein:
the inclination angle of the inclined plane of the first blade has any one selected from greater than 0 degrees and less than 90 degrees on the basis of the traveling electrode.

9. The doctor blade according to claim 1, wherein:
the first blade and the second blade are each arranged orthogonally to the traveling electrode.

10. The doctor blade according to claim 1, wherein:
the first tip of the first blade further comprises a curved surface at the end, and
the curved surface and the inclined surface of the first tip of the first blade are connected to each other.

11. The doctor blade according to claim 10, wherein:
the inclined plane of the first tip of the first blade consists of at least two planes having mutually different inclination angles.

12. The doctor blade according to claim 1, wherein:
the second tip of the second blade further comprises an inclined plane,
the curved surface of the second tip of the second blade is arranged at an end of the second tip of the second blade, and
the curved surface and the inclined plane are connected to each other.

13. The doctor blade according to claim 12, wherein:
the inclined plane of the second tip of the second blade consists of at least two planes having mutually different inclination angles.

14. The doctor blade according to claim 1, wherein:
the doctor blade is used in a dry electrode process, and
the active material is provided as a powder on the current collector.

15. An apparatus for manufacturing an electrode, the apparatus comprising:
the doctor blade according to claim 1;
a feeder arranged in front of the doctor blade and supplying the active material to the current collector; and
a rolling member arranged at the rear of the doctor blade and rolling the electrode provided with the active material.

16. The apparatus for manufacturing an electrode according to claim 15,
further comprising an air blower arranged at the rear of the doctor blade,
wherein the air blower blows air to remove the active material when the active material remains on the uncoated part of the electrode.

17. A method for forming patterns on an electrode by the doctor blade according to claim 1, the method comprising the steps of:
moving the first blade downward so as to contact with the surface of the current collector of the traveling electrode;
maintaining the position of the first blade for a predetermined period, so that the active material provided on the current collector of the traveling electrode is removed;
returning the first blade to its original position so that the end of the first tip of the first blade and the outer surface of the end of the second tip of the second blade are connected to each other; and
performing flattening of the active material of the electrode by the first tip of the first blade and the second tip of the second blade, wherein the end of the first tip of the first blade and the end of the second tip of the second blade maintains a state of being separated from the current collector by a predetermined distance.

18. A method for manufacturing an electrode in the apparatus for manufacturing an electrode according to claim 15, the method comprising the steps of:
supplying an active material onto the current collector of the electrode through a feeder;
moving the first blade downward so as to contact with the surface of the current collector of the traveling electrode;
maintaining the position of the first blade for a predetermined period, so that the active material provided on the current collector of the traveling electrode is removed;
returning the first blade to its original position, so that the end of the first tip of the first blade and the outer surface of the end of the second tip of the second blade are connected to each other; and
performing flattening of the active material of the electrode by the first tip of the first blade and the second tip of the second blade, wherein the end of the first tip of the first blade and the end of the second tip of the second blade maintains a state of being separated from the current collector by a predetermined distance.

19. The method for manufacturing an electrode according to claim 18,
further comprising removing the active material by blowing air with an air blower when the active material remains on the uncoated part of the electrode where flattening of the active material has been performed.

20. The method for manufacturing an electrode according to claim 18,
further comprising rolling the electrode on which flattening of the active material has been performed with a rolling member.
